# EUROPEAN PATENT SPECIFICATION

(11) **EP 1 930 560 B1**
(45) Date of publication and mention of the grant of the patent: **16.11.2011**
(21) Application number: 07270067.7
(22) Date of filing: 23.11.2007
(51) Int. Cl.: F01L 1/344

(54) **Hydraulic control system for a variable camshaft timing phaser**
Hydraulisches Steuersystem für Nockenwellenversteller
Système de commande hydraulique pour déphaseur d'arbre à cames

(30) Priority: 07.12.2006 GB 0624438
(43) Date of publication of application: 11.06.2008
(73) Proprietor: Ford Global Technologies, LLC, Dearborn, MI 48126 (US); JAGUAR CARS LIMITED, Whitley Coventry Warwickshire CV3 4LF (GB)
(72) Inventor: Child, Matthew James, Warwick, CV34 6ET (GB)
(74) Representative: Potts, Susan Patricia

(56) References cited:
- EP-A1- 1 400 661
- WO-A1-2006/011648

## Description

The invention is related to a hydraulic control system for controlling the operation of a variable camshaft timing (VCT) system. More specifically, the present invention relates to a control system utilized to lock and unlock a lock pin in a VCT phaser.

The performance of an internal combustion engine can be improved by the use of dual camshafts, one to operate the intake valves of the various cylinders of the engine and the other to operate the exhaust valves. Typically, one of such camshafts is driven by the crankshaft of the engine, through a sprocket and chain drive or a belt drive, and the other of such camshafts is driven by the first, through a second sprocket and chain drive or a second belt drive. Alternatively, both of the camshafts can be driven by a single crankshaft powered chain drive or belt drive. Engine performance in an engine with dual camshafts can be further improved, in terms of idle quality, fuel economy, reduced emissions or increased torque, by changing the positional relationship of one of the camshafts, usually the camshaft which operates the intake valves of the engine, relative to the other camshaft and relative to the crankshaft, to thereby vary the timing of the engine in terms of the operation of intake valves relative to its exhaust valves or in terms of the operation of its valves relative to the position of the crankshaft.

US5002023 describes a VCT phaser having a pair of oppositely acting hydraulic cylinders which operate with a hydraulic system which includes appropriate hydraulic flow elements to selectively transfer hydraulic fluid from one of the cylinders to the other to advance or retard the circumferential position of a camshaft relative to a crankshaft. The VCT system utilizes a control valve in which the exhaustion of hydraulic fluid from one or another of the oppositely acting cylinders is permitted by moving a spool within the valve one way or another from its centred or null position. The movement of the spool occurs in response to an increase or decrease in control hydraulic pressure on one end of the spool and the relationship between the hydraulic force on the one end and an opposing direct mechanical force from a compression spring.

However, when the engine is shut down, oil can leak from the VCT phaser. Consequently, during an engine start, before the engine oil pump generates sufficient oil pressure, the lack of controlling oil pressure in the chambers can allow the phaser to oscillate excessively, producing noise and possibly damaging the mechanism. Hence, it is desirable to have the phaser locked in a particular position while the engine is being started. One known solution is to employ a lock pin that can lock the phaser in a specific phase angle position relative to the crankshaft when insufficient oil exists in the chambers. These lock pins are typically spring loaded to engage and are released using engine oil pressure.

US2004/0055550A discloses a VCT system in which the spool valve used to control the VCT mechanism is also used to actively control the lock pin. In other words, a VCT system that utilizes a spool valve for controlling the VCT mechanism is actively used to control a lock pin. The spool valve utilises a spool having multiple lands such that the position of the spool directly influences the supply of oil to the lock pin and the flow of oil between the advance or retard chambers of the phaser. The VCT mechanism has the lock pin disposed to engage a recess with the oil acting on the lock pin to disengage the lock pin from the recess. The spool valve has three lands which cooperate with oil passages to control the flow of oil for adjusting and maintaining the angular relationship of the phaser and the flow of oil to release the lock pin. The spool position is monitored and controlled by a solenoid with closed loop control. Under normal operating conditions the lock pin will not unlock until sufficient oil pressure is available and there is a signal from the ECU (engine control unit). Provided both are present, the spool will open the oil passage to the lock pin allowing pressurized oil to unlock the pin. A disadvantage of this arrangement is that every time the spool returns to a base position (to return the phaser to its base position), the lock pin oil pressure is shut-off and the pin engages. During the life of the engine, the lock pin will engage and disengage numerous times inducing unwanted wear on the lock pin, its bore and the pin seat. Moreover, the time taken to release the lock pin slows the phaser response time.

The present invention provides a method and means for ameliorating the above problems.

According to a first aspect of the present invention there is provided a hydraulic control system for a variable camshaft timing (VCT) phaser of an internal combustion engine, the VCT phaser having an advance chamber, a retard chamber and a spring-loaded lock pin to lock the phaser in a predetermined position when the engine is started, the control system comprising a spool valve in which a spool is slidable in a bore in a valve housing having an advance passage opening into the bore and communicating with the advance chamber and a retard passage opening into the bore and communicating with the retard chamber, the spool controlling flow of hydraulic fluid between the advance passage and the bore and between the retard passage and the bore, the housing also including a lock passage for supplying hydraulic pressure to release the lock pin, a lock pin feed passage for communication with a source of hydraulic pressure and a vent passage for communication with a sump, with the spool controlling communication between the lock pin feed passage and the bore and between the vent passage and the bore, characterised in that the lock pin feed passage opens into the bore between the lock passage and the vent passage and that the spool blocks the bore such that the lock passage is not directly connected to the vent passage.

Conveniently the spool comprises first, second, third, and fourth lands spaced apart and dividing the bore into first, second, and third chambers between adjacent lands.

Preferably, the spool has a base position in which the third land interrupts fluid communication between the lock pin feed passage and the vent passage while the lock pin feed passage is in communication with the lock passage through the third chamber.

The second land may be arranged between the first and third lands and the third land arranged between said second and fourth lands.

The third chamber may be is defined between the third and fourth lands, the spool being displaceable to a first position in which the lock pin feed passage is in communication with the lock passage and a second position in which the lock pin feed passage is in communication with the vent passage.

Where the spool has a base position as described above, a solenoid may be arranged to bias the spool in one direction and a spring is arranged to bias the spool in the other direction, the spool being biased to the base position by the spring when no current is supplied to the solenoid. In such an arrangement, the third land preferably prevents communication between the vent passage and the lock passage in all operational positions of the spool attainable under the action of the solenoid and the spring. Conveniently, the second land is arranged between the first and third lands and the third land is arranged between the second and fourth lands, the spring being coupled to an end of the spool farthest from the first land, in which case the fluid passages may further comprise an advance passage and a retard passage, the spool having an advance position in which the retard passage is occluded by the first land and a retard position in which the advance passage is occluded by the second land.

In another aspect, the invention provides a method of controlling a variable camshaft timing (VCT) phaser of an internal combustion engine, the VCT phaser including a spring-loaded lock pin to lock the phaser in a predetermined position when the engine is started and being actuated hydraulically by a spool valve comprising a spool with a plurality of lands housed within a valve housing having a plurality of passages, the lands defining chambers between the lands, the axial position of the spool determining which chambers are in fluid communication, the spool being biased in one direction by a spring and in the other direction by a solenoid to position the spool, the method comprising providing no current to the solenoid when an electronic control unit coupled to the VCT phaser and the engine commands the spool to assume a base position, said passages including a lock pin feed passage for communication with a source of hydraulic pressure, a lock passage for supplying hydraulic pressure to release the lock pin and a vent passage for communication with a sump such that in the base position of the spool the third land interrupts fluid communication between the lock pin feed passage and the vent passage while the lock pin feed passage is in communication with the lock passage through the third chamber.

The invention will be described by way of example and with reference to the accompanying drawings, in which:
Fig.1 is a schematic diagram of a lock pin control valve according to the present invention;
Fig.2 is a cross-section through a valve spool for use in the lock pin control valve shown in Fig.1;
Fig.3 is a cross-section through a valve sleeve for use in the lock pin control valve shown in Fig.1;
Fig.4 is a cross-section of a lock pin control valve incorporating the valve spool shown in Fig.2 with the valve sleeve shown in Fig.3 and showing the spool in a base position;
Fig.5 is a cross-section based on Fig.4 with the spool in the position assumed during engine starting; and
Fig.6 is a cross-section based on Fig.4 of the lock pin control valve of Fig.2 with the spool in the position assumed during when the VCT system is active and the VCT phaser is advanced.

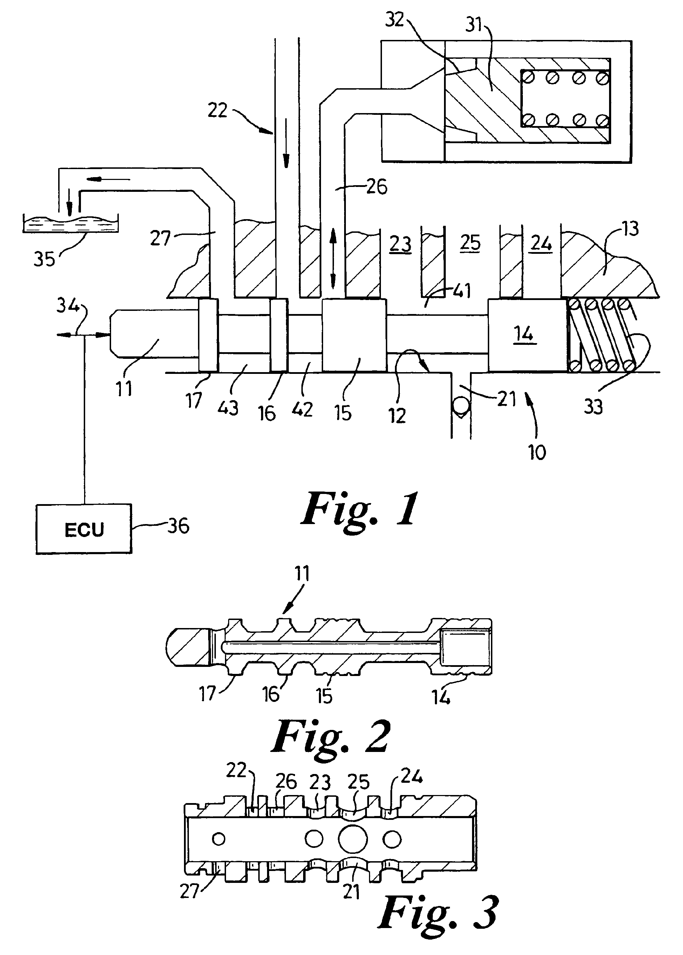

The lock pin control valve shown in Figs. 1-6 is particularly useful for a VCT system of the type described in US2004/0055550A which is hereby incorporated herein by reference. However, the workings of the system will be sufficiently explained for an understanding of the present invention. With particular reference to Fig.1, there is shown part of a VCT system including a control valve 10 comprising a cylindrical spool 11 slidable in the bore 12 of a valve housing, in this example a valve sleeve 13. The spool 11 has first, second, third and fourth lands 14, 15, 16, and 17 which co-operate with the bore 12 to divide the bore into first, second and third chambers 41, 42 and 43. The engine oil supply is pumped to the first chamber 41 through a first or main oil feed passage 21 which incorporates a check valve. Engine oil is also pumped directly to the second and third chambers 42 and 43 through a second or lock pin feed passage 22 which is spaced along the bore 12 from the main oil feed passage 21. The lock pin feed passage 22 may branch off the main oil feed passage 21.

A passage 23, conveniently referred to as the advance passage, leads to the advance chamber (not shown) of a VCT phaser and similarly another passage 24, conveniently referred to as the retard passage, leads to the retard chamber (not shown) of the phaser, the two chambers being separated by a vane which forms part of the phaser. The VCT phaser shown in US2004/0055550A is of the kind known as a "cam torque actuated" (CTA) phaser, an oil supply passage with check valves (not shown) providing a recycling line to allow oil to pass between the advance and retard chambers. The direction of the oil flow depends on the position of the spool 11 in the sleeve 13, in the manner described in US5107804 which is also hereby incorporated herein by reference. A control solenoid, represented by a double headed arrow 34, acts on one end of the spool 11 and controls movement of the spool relative to the valve sleeve 13 under the control of an engine control unit (ECU) 36. The force of the solenoid 34 opposes the force of a compression spring 33 acting against the other end of the spool 11 so that the axial position of the spool is determined by the solenoid current. When the solenoid 34 is inactive, the spool 11 is biased by the spring 33 to a base position.

A lock passage 26 directs oil from the bore 12 to and from a lock pin 31 which is spring-loaded to fit into a recess 32 to thereby lock the phaser in one position. A vent passage 27 vents to the engine oil sump 35 allowing oil to flow from the valve 10 back to the oil sump.

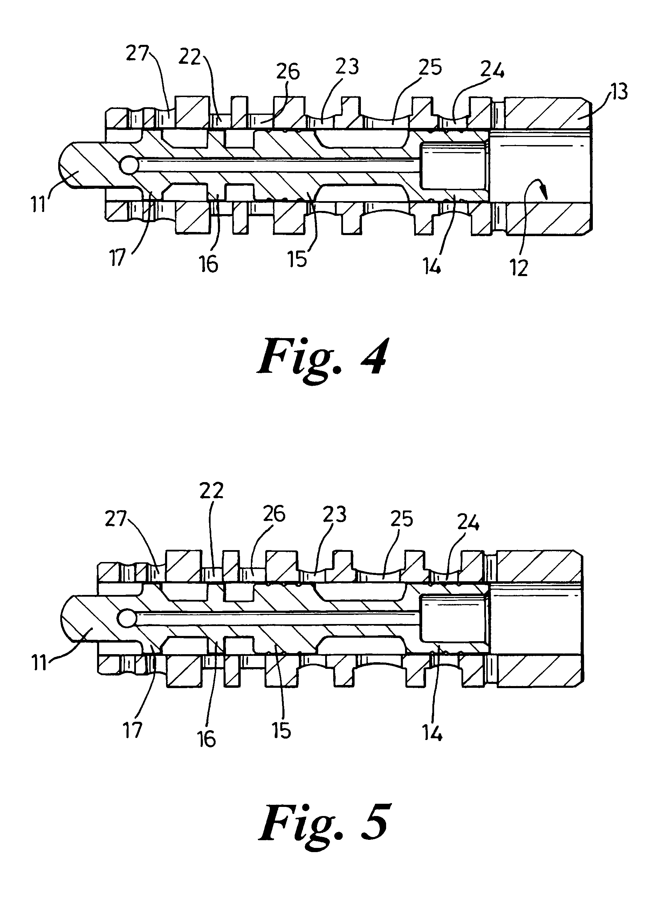

With further reference to Figs. 2 to 4, the spool 11 is in the base position, that is biased to an inactive position by the spring 33, when no current is in the solenoid. The first chamber 41 acts to interconnect the passages utilised in the operation of the advance and retard vane and the second and third chambers 42 and 43 are utilised in the lock pin control. In this condition, shown in Fig.4, the first land 14 blocks passage 24 and passages 23 and 25 are open. The third land 16 is positioned leftwards of the lock pin feed passage 22 which is open to the lock passage 26. The third land 16 also closes the lock pin feed passage 22 from the vent passage 27. The second land 15 separates the lock pin control side of the spool valve 10 from the VCT control. In this condition, with the engine switched off, the lock pin 31 is engaged.

In order to maintain control during engine starting when oil pressure is insufficient to control the VCT, the lock pin 31 is maintained in its locked position by moving the spool position using a predetermined current supplied by the ECU 36 to the control solenoid 34. The ECU 36 monitors various engine parameters, receiving signals from sensors corresponding to camshaft and crankshaft positions and utilizes this information to operate the control solenoid through a closed-loop feedback system which corrects for any phase angle error. This shown in Fig.5 where the spool 11 has moved inwards (rightwards as shown) sufficient for the third land 16 to close the bore 12 between the lock pin feed passage 22 and the lock passage 26 whilst simultaneously opening the lock pin feed passage 22 to the vent passage 27.

When oil pressure in the engine begins to build and there is sufficient oil pressure available for operation of the VCT control to unlock the pin (normally within 2 seconds of the engine start), the ECU 36 sets the control solenoid current to zero and the spring 33 pushes the spool 11 further outward to a base position. The third land 16 co-operating with the bore 12 shuts off the vent passage 27 and opens the lock passage 26, permitting oil flow from the lock pin feed passage 22 to unlock the lock pin 31. This is shown in Fig.4.

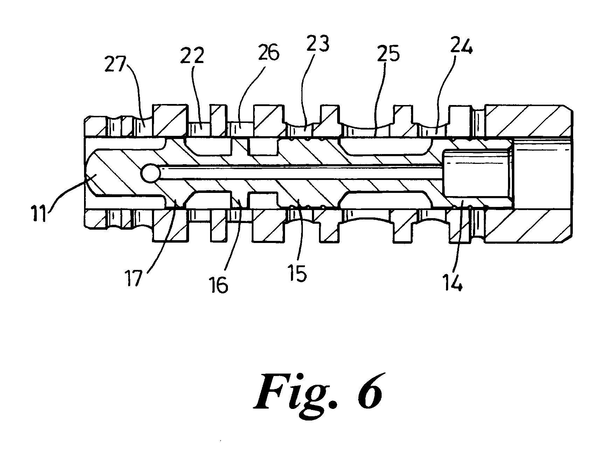

During the operation of the phaser (advancing and retarding) the spool will shuttle in and out from the retarded position shown in Fig.5 to the advanced position shown in Fig.6 as is normal, passing through the null position when both the advance and retard passageways 23,24 are blocked. The third land 16 will pass back and forth and may momentarily cut off the lock pin feed passage 22 from the lock passage 26. However, since the vent passage 27 remains closed, pressure in the lock passage 26 will not be lost over such short time periods. However, if the engine is switched off, the spool will return to the base position shown in Fig.4 under the bias of the spring 33 and, since the vent passage 27 is closed, the lock pin 31 remains disengaged until such time as the oil pressure falls due to system leakage. This reduces the number of pin engage/disengage operations and helps reduce wear.

The provision of the additional land 16 on the spool 11 controls the flow of oil back to vent 27 or sump 35 in such a way that the lock passage 26 is never directly connected to the vent passage 27.

## Claims

1. A hydraulic control system for a variable camshaft timing (VCT) phaser of an internal combustion engine, the VCT phaser having an advance chamber, a retard chamber and a spring-loaded lock pin (31) to lock the phaser in a predetermined position when the engine is started, the control system comprising a spool valve (10) in which a spool (11) is slidable in a bore (12) in a valve housing (13) having an advance passage (23) opening into the bore (12) and communicating with the advance chamber and a retard passage (24) opening into the bore (12) and communicating with the retard chamber, the spool (11) controlling flow of hydraulic fluid between the advance passage (23) and the bore (12) and between the retard passage (24) and the bore (12), the housing also including a lock passage (26) for supplying hydraulic pressure to release the lock pin (31), a lock pin feed passage (22) for communication with a source of hydraulic pressure and a vent passage (27) for communication with a sump (35), with the spool (11) controlling communication between the lock pin feed passage (22) and the bore (12) and between the vent passage (27) and the bore (12), **characterised in that** the lock pin feed passage (22) opens into the bore (12) between the lock passage (26) and the vent passage (27) and that the spool (11) blocks the bore (12) such that the lock passage (26) is not directly connected to the vent passage (27).

2. A hydraulic control system according to claim 1 wherein the spool (11) comprises first, second, third, and fourth lands (14, 15, 16, 17) spaced apart and dividing the bore into first, second, and third chambers (41, 42, 43, 44) between adjacent lands.

3. A hydraulic control system according to claim 2 wherein the spool (11) has a base position in which the third land (16) interrupts fluid communication between the lock pin feed passage (22) and the vent passage (27) while the lock pin feed passage (22) is in communication with the lock passage (26) through the third chamber (43).

4. A hydraulic control system according to claim 2 or claim 3 wherein the second land (15) is arranged between the first and third lands (14 and 16) and the third land (16) is arranged between said second and fourth lands (15 and 17).

5. A hydraulic control system according to any of claims 2 to 4 wherein the third chamber (43) is defined between the third and fourth lands (16 and 17), the spool (11) being displaceable to a first position in which the lock pin feed passage (22) is in communication with the lock passage (26) and a second position in which the lock pin feed passage (22) is in communication with the vent passage (27).

6. A hydraulic control system according to claim 3 or any claim dependent thereon wherein a solenoid (34) is arranged to bias the spool (11) in one direction and a spring (33) is arranged to bias the spool in the other direction, the spool being biased to the base position by the spring when no current is supplied to the solenoid.

7. A hydraulic control system according to claim 6 wherein in all operational positions of the spool (11) attainable under the action of the solenoid (34) and the spring (33) the third land (16) prevents communication between the vent passage (27) and the lock passage (26).

8. A hydraulic control system according to claim 6 or claim 7 wherein the second land (15) is arranged between the first and third lands (14 and 16) and the third land (16) is arranged between the second and fourth lands (15 and 17), the spring (33) being coupled to an end of the spool farthest from the first land (14).

9. A method of controlling a variable camshaft timing (VCT) phaser of an internal combustion engine having a hydraulic control system as claimed in claim 3 wherein , the spool (11) is biased in one direction by a spring (33) and in the other direction by a solenoid (34) to position the spool (11) and the method comprises providing no current to the solenoid (34) when an electronic control unit coupled to the VCT phaser and the engine commands the spool to assume the base position.

## Patentansprüche

1. Hydraulisches Steuersystem für einen Versteller für variable Nockenwellenzeitvorgabe (VCT-Versteller) einer Brennkraftmaschine, wobei der Nockenwellenversteller eine Frühverstellkammer, eine Spätverstellkammer und einen federbelasteten Verriegelungsstift (31) zur Verriegelung des Verstellers in einer im Voraus bestimmten Position, wenn die Maschine gestartet wird, aufweist, wobei das Steuersystem Folgendes umfasst: ein Schieberventil (10), in dem sich ein Schieber (11) gleitfähig in einer Bohrung (12) in einem Ventilgehäuse (13) befindet, das einen Frühverstelldurchlass (23), der in die Bohrung (12) mündet und mit der Frühverstellkammer in Verbindung steht, und einen Spätverstelldurchlass (24), der in die Bohrung (12) mündet und mit der Spätverstellkammer in Verbindung steht, aufweist, wobei der Schieber (11) die Strömung von Hydraulikfluid zwischen dem Frühverstelldurchlass (23) und der Bohrung (12) und zwischen dem Spätverstelldurchlass (24) und der Bohrung (12) steuert, wobei das Gehäuse außerdem einen Verriegelungsdurchlass (26) zum Liefern von Hydraulikdruck, um den Verriegelungsstift (31) freizugeben, einen Verriegelungsstift-Versorgungsdurchlass (22) für eine Verbindung mit einer Quelle des Hydraulikdrucks und einen Auslassdurchlass (27) für eine Verbindung mit einem Sumpf (35) enthält, wobei der Schieber (11) eine Verbindung zwischen dem Verriegelungsstift-Versorgungsdurchlass (22) und der Bohrung (12) und zwischen dem Auslassdurchlass (27) und der Bohrung (12) steuert, **dadurch gekennzeichnet, dass** der Verriegelungsstift-Versorgungsdurchlass (22) zwischen dem Verriegelungsdurchlass (26) und dem Auslassdurchlass (27) in die Bohrung (12) mündet und der Schieber (11) die Bohrung (12) blockiert, so dass der Verriegelungsdurchlass (26) nicht direkt mit dem Auslassdurchlass (27) verbunden ist.

2. Hydraulisches Steuersystem nach Anspruch 1, wobei der Schieber (11) erste, zweite, dritte und vierte Stege (14, 15, 16, 17) umfasst, die voneinander beabstandet sind und die Bohrung in erste, zweite, und dritte Kammern (41, 42, 43, 44) zwischen benachbarten Stegen unterteilt.

3. Hydraulisches Steuersystem nach Anspruch 2, wobei der Schieber (11) eine Grundposition aufweist, in der der dritte Steg (16) eine Fluidverbindung zwischen dem Verriegelungsstift-Versorgungsdurchlass (22) und dem Auslassdurchlass (27) unterbricht, während der Verriegelungsstift-Versorgungsdurchlass (22) durch die dritte Kammer (43) mit dem Verriegelungsdurchlass (26) in Verbindung steht.

4. Hydraulisches Steuersystem nach Anspruch 2 oder Anspruch 3, wobei der zweite Steg (15) zwischen dem ersten und dem dritten Steg (14 und 16) angeordnet ist und der dritte Steg (16) zwischen dem zweiten und dem vierten Steg (15 und 17) angeordnet ist.

5. Hydraulisches Steuersystem nach einem der Ansprüche 2 bis 4, wobei die dritte Kammer (43) zwischen dem dritten und dem vierten Steg (16 und 17) definiert ist, wobei der Schieber (11) in eine erste Position, in der der Verriegelungsstift-Versorgungsdurchlass (22) mit dem Verriegelungsdurchlass (26) in Verbindung steht, und in eine zweite Position, in der der Verriegelungsstift-Versorgungsdurchlass (22) mit dem Auslassdurchlass (27) in Verbindung steht, verlagerbar ist.

6. Hydraulisches Steuersystem nach Anspruch 3 oder einem davon abhängigen Anspruch, wobei ein Magnet (34) angeordnet ist, um den Schieber (11) in eine Richtung vorzuspannen, und eine Feder (33) angeordnet ist, um den Schieber in die andere Richtung vorzuspannen, wobei der Schieber durch die Feder zu der Grundposition vorgespannt ist, wenn kein Strom an den Magneten geliefert wird.

7. Hydraulisches Steuersystem nach Anspruch 6, wobei in allen Betriebspositionen des Schiebers (11), die unter der Wirkung des Magneten (34) und der Feder (33) erreicht werden können, der dritte Steg (16) eine Verbindung zwischen dem Auslassdurchlass (27) und dem Verriegelungsdurchlass (26) verhindert.

8. Hydraulisches Steuersystem nach Anspruch 6 oder Anspruch 7, wobei der zweite Steg (15) zwischen dem ersten und dem dritten Steg (14 und 16) angeordnet ist und der dritte Steg (16) zwischen dem zweiten und dem vierten Steg (15 und 17) angeordnet ist, wobei die Feder (33) mit einem Ende des Schiebers, das von dem ersten Steg (14) am weitesten entfernt ist, verbunden ist.

9. Verfahren zum Steuern eines Nockenwellenverstellers (VCT-Verstellers) einer Brennkraftmaschine, die ein hydraulisches Steuersystem nach Anspruch 3 aufweist, wobei der Schieber (11) durch eine Feder (33) in eine Richtung vorgespannt ist und durch einen Magneten (34) in die andere Richtung vorgespannt ist, um den Schieber (11) zu positionieren, und das Verfahren umfasst, an den Magneten (34) keinen Strom zu liefern, wenn eine elektronische Steuereinheit, die mit dem VCT-Versteller und der Maschine verbunden ist, den Schieber anweist, die Grundposition einzunehmen.

## Revendications

1. Système de commande hydraulique pour un déphaseur d'arbre à cames (VCT) d'un moteur à combustion interne, le déphaseur VCT possédant une chambre d'avance, une chambre de retard et une goupille de blocage (31) rappelée par ressort destinée à bloquer le déphaseur dans une position prédéfinie au moment du démarrage du moteur, le système de commande comprenant un distributeur (10) à tiroir comprenant un tiroir (11) apte à coulisser dans un alésage (12) ménagé dans un logement (13) de distributeur pourvu d'un passage d'avance (23) débouchant dans l'alésage (12) et communiquant avec la chambre d'avance et d'un passage de retard (24) débouchant dans l'alésage (12) et communiquant avec la chambre de retard, le tiroir (11) régulant le débit de fluide hydraulique entre le passage d'avance (23) et l'alésage (12) et entre le passage de retard (24) et l'alésage (12), le logement comportant également un passage de blocage (26) destiné à fournir une pression hydraulique permettant de libérer la goupille de blocage (31), un passage d'alimentation (22) de goupille de blocage destiné à communiquer avec une source de pression hydraulique et un passage d'évacuation (27) destiné à communiquer avec un carter (35), le tiroir (11) commandant la communication entre le passage d'alimentation (22) de goupille de blocage et l'alésage (12) et entre le passage d'évacuation (27) et l'alésage (12),
**caractérisé en ce que** le passage d'alimentation (22) de goupille de blocage débouche dans l'alésage (12) entre le passage de blocage (26) et le passage d'évacuation (27), et **en ce que** le tiroir (11) bouche l'alésage (12) de façon à ne pas raccorder directement le passage de blocage (26) au passage d'évacuation (27).

2. Système de commande hydraulique selon la revendication 1, le tiroir (11) comprenant des première, deuxième, troisième et quatrièmes crêtes (14, 15, 16, 17) espacées et divisant l'alésage en des première, deuxième et troisième chambres (41, 42, 43, 44) entre des crêtes adjacentes.

3. Système de commande hydraulique selon la revendication 2, le tiroir (11) possédant une position de base dans laquelle la troisième crête (16) interrompt la communication fluidique entre le passage d'alimentation (22) de goupille de blocage et le passage d'évacuation (27) alors que le passage d'alimentation (22) de goupille de blocage communique avec le passage de blocage (26) par la troisième chambre (43).

4. Système de commande hydraulique selon la revendication 2 ou la revendication 3, la deuxième crête (15) étant agencée entre les première et troisième crêtes (14 et 16) et la troisième crête (16) étant agencée entre les deuxième et quatrième crêtes (15 et 17).

5. Système de commande hydraulique selon l'une quelconque des revendications 2 à 4, la troisième chambre (43) étant définie entre les troisième et quatrième crêtes (16 et 17), le tiroir (11) étant apte à être déplacé jusqu'à une première position dans laquelle le passage d'alimentation (22) de goupille de blocage communique avec le passage de blocage (26) et une deuxième position dans laquelle le passage d'alimentation (22) de goupille de blocage communique avec le passage d'évacuation (27).

6. Système de commande hydraulique selon la revendication 3 ou toute revendication dépendant de celle-ci, un solénoïde (34) étant agencé pour solliciter le tiroir (11) dans un sens, et un ressort (33) étant agencé pour solliciter le tiroir dans l'autre sens, le tiroir étant sollicité vers la position de base par le ressort lorsque le solénoïde n'est pas alimenté en courant.

7. Système de commande hydraulique selon la revendication 6, dans toutes les positions fonctionnelles du tiroir (11) susceptibles d'être atteintes sous l'effet du solénoïde (34) et du ressort (33), la troisième crête (16) empêchant toute communication entre le passage d'évacuation (27) et le passage de blocage (26).

8. Système de commande hydraulique selon la revendication 6 ou la revendication 7, la deuxième crête (15) étant agencée entre les première et troisième crêtes (14 et 16), et la troisième crête (16) étant agencée entre les deuxième et quatrième crêtes (15 et 17), le ressort (33) étant relié à une extrémité du tiroir la plus éloignée de la première crête (14).

9. Procédé de commande d'un déphaseur d'arbre à cames (VCT) d'un moteur à combustion interne équipé d'un système de commande hydraulique selon la revendication 3, le tiroir (11) étant sollicité dans un sens par un ressort (33) et dans l'autre sens par un solénoïde (34) de manière à positionner le tiroir (11), et le procédé comprenant l'étape consistant à ne pas alimenter en courant le solénoïde (34) lorsqu'une unité de commande électronique reliée au déphaseur VCT et au moteur commande le tiroir pour lui faire adopter la position de base.
